# EUROPÄISCHE PATENTSCHRIFT

(11) **EP 3 086 063 B1**
(45) Veröffentlichungstag und Bekanntmachung des Hinweises auf die Patenterteilung: **12.06.2019**
(21) Anmeldenummer: 16161917.6
(22) Anmeldetag: 23.03.2016
(51) Int. Cl.: F25D 23/02

(54) **HAUSHALTSKÄLTEGERÄT MIT EINER ÜBERLAST-SCHUTZEINRICHTUNG EINER ÖFFNUNGS-HILFSVORRICHTUNG UND ZUGEHÖRIGES VERFAHREN**
HOUSEHOLD REFRIGERATOR WITH AN OVERLOAD PROTECTION DEVICE FOR AN OPENING AID AND ASSOCIATED METHOD
APPAREIL FRIGORIFIQUE MÉNAGER COMPRENANT UN DISPOSITIF DE PROTECTION CONTRE LA SURCHARGE D'UN APPAREIL AUXILIAIRE D'OUVERTURE ET PROCÉDÉ CORRESPONDANT

(30) Priorität: 22.04.2015 DE 102015207311
(43) Veröffentlichungstag der Anmeldung: 26.10.2016
(73) Patentinhaber: BSH Hausgeräte GmbH, 81739 München (DE)
(72) Erfinder: Heydel, Adolf, 71111 Waldenbuch (DE); Schmidt, Nikolaus, 71067 Sindelfingen (DE)

(56) Entgegenhaltungen:
- JP-A- H11 216 033
- JP-A- 2000 070 060
- JP-A- 2001 280 827
- JP-A- 2006 200 891

## Beschreibung

Die Erfindung betrifft ein Haushaltskältegerät, aufweisend einen wärmeisolierten Korpus, der einen Innenbehälter mit einem zum Lagern von Lebensmitteln vorgesehenen kühlbaren Innenraum aufweist, eine zum Kühlen des kühlbaren Innenraums vorgesehene Kältevorrichtung und eine elektro-mechanische Öffnungs-Hilfsvorrichtung, sowie ein relativ zum wärmeisolierten Korpus schwenkbar gelagertes, zum Öffnen und Schließen des kühlbaren Innenraums vorgesehenes Türblatt oder eine Schublade, welche im geschlossenen Zustand in den kühlbaren Innenraum geschoben ist, um diesen zu schließen, und im geöffneten Zustand zumindest teilweise aus dem kühlbaren Innenraum herausgezogen ist, wobei die elektro-mechanische Öffnungs-Hilfsvorrichtung einen elektro-mechanischen Aktuator aufweist, der ausgebildet ist, bei seiner Aktivierung das geschlossene Türblatt bzw. die geschlossene Schublade durch Verstellen eines Stellkörpers der elektro-mechanischen Öffnungs-Hilfsvorrichtung zumindest teilweise automatisch zu öffnen. Die Erfindung betrifft außerdem ein Verfahren zum Betreiben eines solchen Haushaltskältegerätes.

Die DE 10 2006 061 083 A1 offenbart ein Haushaltskältegerät, das einen wärmeisolierten Korpus mit einem Innenbehälter aufweist. Der Innenbehälter begrenzt einen kühlbaren Innenraum. Das Haushaltskältegerät umfasst ein relativ zum Korpus schwenkbar gelagertes, zum Öffnen und Schließen des Innenraums vorgesehenes Türblatt und eine Türöffnungshilfe, die einen Stellkörper und einen Luftdrucksensor aufweist, der eingerichtet ist, eine aufgrund eines Drückens und/oder Ziehens an dem geschlossenen Türblatt resultierende Luftdruckänderung innerhalb des Innenraums zu ermitteln, um daraufhin automatisch mittels des Stellkörpers das geschlossene Türblatt zumindest teilweise zu öffnen.

Die JP 2006 200891 A beschreibt eine elektro-mechanische Öffnungs-Hilfsvorrichtung mit einem Stößel und einem Zahnstangenprofil des Stößels, das mit einem Zahnrad eines von einem elektrischen Motor angetriebenen Getriebes kämmt. Ein Vorsprung des Stößels bildet dabei einen Aufnahmesitz für eine Federwendel. Der Aufnahmesitz ist einteilig mit dem Stößel ausgebildet.

Die JP H02 146487 A und die JP 2000-70060 A beschreiben jeweils eine elektro-mechanische Öffnungs-Hilfsvorrichtung mit einen Stößel, der einteilig mit einem Stellkörper ausgebildet ist, der ein angeformtes Zahnstangenprofil trägt. Eine Kerbe des Stellkörpers ist einteilig an dem Stellkörper angeformt und umgreift lediglich in einem vollständig ausgefahrenen Zustand des Stößels formschlüssig einen Federvorsprung an einer Innenwand des Gehäuses.

Aufgabe der Erfindung ist es, ein Haushaltskältegerät mit einer elektro-mechanischen Öffnungs-Hilfsvorrichtung zum unterstützenden Öffnen eines geschlossenen Türblatts oder einer geschlossenen Schublade anzugeben, die besonders funktionssicher zu betreiben ist.

Die Aufgabe der Erfindung wird gelöst durch ein Haushaltskältegerät, aufweisend einen wärmeisolierten Korpus, der einen Innenbehälter mit einem zum Lagern von Lebensmitteln vorgesehenen kühlbaren Innenraum aufweist, eine zum Kühlen des kühlbaren Innenraums vorgesehene Kältevorrichtung und eine elektro-mechanische Öffnungs-Hilfsvorrichtung, sowie ein relativ zum wärmeisolierten Korpus schwenkbar gelagertes, zum Öffnen und Schließen des kühlbaren Innenraums vorgesehenes Türblatt oder eine Schublade, welche im geschlossenen Zustand in den kühlbaren Innenraum geschoben ist, um diesen zu schließen, und im geöffneten Zustand zumindest teilweise aus dem kühlbaren Innenraum herausgezogen ist, wobei die elektro-mechanische Öffnungs-Hilfsvorrichtung einen elektro-mechanischen Aktuator aufweist, der ausgebildet ist, bei seiner Aktivierung das geschlossene Türblatt bzw. die geschlossene Schublade durch Verstellen eines Stellkörpers der elektro-mechanischen Öffnungs-Hilfsvorrichtung zumindest teilweise automatisch zu öffnen, wobei der elektro-mechanische Aktuator einen automatisch verstellbaren Grundkörper, einen im Grundkörper gelagerten Stößel als Stellkörper und eine den Stößel im Grundkörper arretierende Überlast-Schutzeinrichtung aufweist, die ausgebildet ist, den Stößel im Grundkörper starr festzuhalten, solange eine auf den Stößel einwirkende Stoßkraft kleiner bleibt, als eine vorgegebene Auslösekraft und den Stößel vom Grundkörper freizugeben, sobald eine auf den Stößel einwirkende Stoßkraft die Auslösekraft überschreitet.

Eine entsprechende elektro-mechanische Öffnungs-Hilfsvorrichtung kann einen elektro-mechanischen Aktuator aufweisen, mit einem elektrischen Motor, einem Antriebsritzel, einem Doppelverzahnungs-Stirnrad und einer Zahnstange, wobei das Antriebsritzel mit einer Motorwelle des Motors verbunden ist und mit der Eingangsverzahnung des Doppelverzahnungs-Stirnrades kämmt, die Ausgangsverzahnung des Doppelverzahnungs-Stirnrades mit einem Zahnstangenprofil der Zahnstange in Eingriff ist und die Zahnstange mit dem Stellkörper verbunden ist.

Im Falle eines Türblatts ist dieses vorzugsweise bezüglich einer Achse, die vorzugsweise vertikal verläuft, schwenkbar gelagert. Das erfindungsgemäße Haushaltskältegerät kann zusätzlich oder alternativ zum Türblatt eine Schublade aufweisen, welche im geschlossenen Zustand in den kühlbaren Innenraum geschoben ist, um diesen zu schließen, und im geöffneten Zustand zumindest teilweise aus dem kühlbaren Innenraum herausgezogen ist. In einem solchen Falle ist die elektro-mechanische Öffnungs-Hilfsvorrichtung eingerichtet, eine aufgrund eines Drückens und/oder Ziehens an der geschlossenen Schublade ausgelösten Aktivierung der elektro-mechanischen Öffnungs-Hilfsvorrichtung, die geschlossene Schublade mittels der elektro-mechanischen Öffnungs-Hilfsvorrichtung zumindest teilweise zu öffnen bzw. ein Öffnen zu unterstützen.

Die Kältevorrichtung ist vorzugsweise ein Kältemittelkreislauf. Der Kältemittelkreislauf umfasst einen Verdichter und insbesondere einen dem Verdichter nachgeschalteten Verflüssiger, eine dem Verflüssiger nachgeschaltete Drosselvorrichtung und einen Verdampfer, der zwischen der Drosselvorrichtung und dem Verdichter angeordnet ist.

An der Richtung kühlbarem Innenraum gerichteten Seite des Türblatts bzw. der Schublade ist vorzugsweise eine elastische Magnetdichtung angebracht, welche bei geschlossenem Türblatt bzw. bei geschlossener Schublade am wärmeisolierten Korpus dichtend anliegt. Die Magnetdichtung ist elastisch, sodass sich bei einem Drücken am geschlossenen Türblatt bzw. an der geschlossenen Schublade dieses bzw. diese ein wenig in Richtung des kühlbaren Innenraums bewegt, wodurch sich der Luftdruck innerhalb des Innenraums ändert. Aufgrund der elastischen Magnetdichtung löst sich bei einem Ziehen am geschlossenen Türblatt bzw. an der geschlossenen Schublade die Magnetdichtung nicht sofort vom wärmeisolierten Korpus, wodurch sich der Luftdruck innerhalb des kühlbaren Innenraums ändert.

Eine solche Änderung des Luftdrucks kann beispielsweise mittels eines Luftdrucksensors automatisch erkannt werden, wodurch auf einen Wunsch einer Person, das geschlossene Türblatt bzw. die geschlossene Schublade öffnen zu wollen, geschlossen werden kann. So kann beispielsweise eine mit dem Luftdrucksensor verbundene Steuervorrichtung die elektro-mechanische Öffnungs-Hilfsvorrichtung automatisch aktivieren. Die erfindungsgemäße elektro-mechanische Öffnungs-Hilfsvorrichtung kann aber auch auf andere Weise aktiviert werden, beispielsweise durch einen manuell zu betätigenden elektrischen Taster oder durch andere Arten von Sensoren, die eine Absicht einer Person, das geschlossene Türblatt bzw. die geschlossene Schublade öffnen zu wollen, erkennen bzw. zumindest prädiktiv feststellen können.

Die elektro-mechanische Öffnungs-Hilfsvorrichtung betätigt einen Stellkörper, vorzugsweise einen Stößel, welcher automatisch z.B. mittels eines Aktuators beispielsweise von einer eingefahrenen in eine ausgefahrene Stellung bewegt werden kann, um das geschlossene Türblatt bzw. die geschlossene Schublade zumindest teilweise zu öffnen, vorzugsweise zumindest soweit zu öffnen, dass sich die Magnetdichtung vom wärmeisolierten Korpus löst.

Indem der elektro-mechanische Aktuator einen automatisch verstellbaren Grundkörper, einen im Grundkörper gelagerten Stößel als Stellkörper und eine den Stößel im Grundkörper arretierende Überlast-Schutzeinrichtung aufweist, die ausgebildet ist, den Stößel im Grundkörper starr festzuhalten, solange eine auf den Stößel einwirkende Stoßkraft kleiner bleibt, als eine vorgegebene Auslösekraft und den Stößel vom Grundkörper freizugeben, sobald eine auf den Stößel einwirkende Stoßkraft die Auslösekraft überschreitet, wird insoweit eine Art Sicherheitskupplung gebildet, welche sicherstellt, dass bei einer auf den Stößel ausgeübten Kraft, die geeignet wäre beispielsweise das Getriebe oder den Motor mechanisch zu zerstören, der Stößel vom Grundkörper getrennt wird, so dass der Stößel dieser schädlichen Kraft ausweichen kann und die Kraft folglich nicht auf Bauteile, insbesondere auf das Getriebe oder den Motor übertragen werden. Mittels der Überlast-Schutzeinrichtung wird die Öffnungs-Hilfsvorrichtung vor Zerstörung bewahrt.

Generell kann die elektro-mechanische Öffnungs-Hilfsvorrichtung ganz allgemein ein Gehäuse, insbesondere zwei Gehäusehälften aufweisen, worin zumindest der elektrischen Motor, das Antriebsritzel, das Doppelverzahnungs-Stirnrad, die Zahnstange, der wenigstens eine Wälzkörper und der Stellkörper angeordnet bzw. gelagert oder befestigt sind. Eines oder mehrere dieser Bauteile können aus glasfaserverstärktem Polyamid (PA-GF) hergestellt sein.

Die Zahnstange überträgt die Linearbewegung auf den Stellkörper. Die Zahnstange ist an dem Grundkörper ausgebildet. Der Grundkörper kann eine Aufnahme aufweisen, in welche der Stellkörper, insbesondere der Stößel eingesteckt und darin verrastet ist. Der Stellkörper, insbesondere der Stößel kann an seinem freien Stirnende eine Kappe aufweisen. Die Kappe kann beispielsweise auf das Stirnende des Stellkörpers, insbesondere des Stößels aufgesteckt oder aufgeschraubt sein. Insbesondere im Falle eines Stellkörpers oder Stößels aus einem metallischen Werkstoff, wie Stahl, kann die Kappe aus Kunststoff hergestellt sein. Die Kappe berührt zumindest während des automatischen Öffnungsvorgangs das zu öffnende Türblatt oder die zu öffnende Schubladenfront an dessen jeweiliger Innenseite.

Die Zahnstange kann an einer dem Zahnstangenprofil gegenüberliegenden Zahnstangenwand eine erste Wälzfläche aufweisen, an der wenigstens ein Wälzkörper, insbesondere wenigstens eine glattwandige oder gezahnte Stützrolle, abwälzt, welcher Wälzkörper sich außerdem an seiner der ersten Wälzfläche gegenüberliegenden Seite gegen das Gehäuse abstützt.

Der elektrische Motor kann in allen Ausführungsvarianten ein permanenterregter Wechselstrom-Synchronmotor sein, der insbesondere mit einer Drehzahl zwischen 500 und 1.000 Umdrehungen pro Minute, insbesondere mit einer Drehzahl zwischen 700 und 800 Umdrehungen pro Minute betrieben wird.

Für den Antrieb kann ein sogenannter BLDC-Motor mit einer extrem flachen Bauweise und einem Drehmoment von ca. 0,27 Nm bei ca. 780 U/min verwendet werden, um hohe Drehmomente bei möglichst geringer Drehzahlen bereitstellen zu können. Sinusförmige Phasenspannungen/-ströme sorgen für einen weitgehend oberwellenarmen Drehmomentverlauf des Antriebs.

Die Überlast-Schutzeinrichtung kann ein mit dem Grundkörper verbundenes Rastmittel und ein mit dem Stößel verbundenes, zum Rastmittel korrespondierendes Gegenrastmittel aufweisen, wobei Rastmittel und Gegenrastmittel ausgebildet sind, während eines bestimmungsgemäßen Gebrauchs der elektro-mechanischen Öffnungs-Hilfsvorrichtung derart formschlüssig in gegenseitigem Eingriff zu stehen, dass eine durch den elektro-mechanischen Aktuator erzeugte Antriebskraft auf den Stößel übertragbar ist und bei Überschreiten der vorgegebenen Auslösekraft das Rastmittel und das Gegenrastmittel durch eine die vorgegebene Auslösekraft übersteigende Stoßkraft außer Eingriff zu bringen ist, derart, dass sich der Stößel aus seiner starren Anordnung zum Grundkörper löst und zum Grundkörper verstellbar wird.

Die Überlast-Schutzeinrichtung, insbesondere das Rastmittel und das Gegenrastmittel können demgemäß ausgebildet sein, eine starre Verbindung von Stößel und Grundkörper aufrechtzuerhalten, solange die auf den Stößel einwirkenden Kräfte keine Zerstörung von Bauteilen der Öffnungs-Hilfsvorrichtung befürchten lassen. Je nach Bauart der Öffnungs-Hilfsvorrichtung kann eine Auslösekraft definiert und vorgegeben sein, bei deren Überschreiten eine Zerstörung von Bauteilen der Öffnungs-Hilfsvorrichtung zu befürchten ist. Die Überlast-Schutzeinrichtung, insbesondere das Rastmittel und das Gegenrastmittel sind demgemäß ausgebildet, die starre Verbindung von Stößel und Grundkörper zu lösen, d.h. den Stößel freizugeben bzw. beweglich zu machen, sobald die Auslösekraft überschritten wird.

Das Rastmittel kann wenigstens einen, insbesondere zwei gegenüberliegend angeordnete federelastische Rasthaken aufweisen, welche in einer den bestimmungsgemäßen Gebrauch kennzeichnenden Anordnung wenigstens eine Rastfläche des Gegenrastmittels hintergreifen, wobei die federelastischen Rasthaken ausgebildet sind, bei Erreichen der vorgegebenen Auslösekraft sich derart zu biegen, dass die wenigstens eine Rastfläche des Gegenrastmittels freigegeben wird. Ist die Rastfläche des Gegenrastmittels freigegeben, dann ist auch keine starre Verbindung von Stößel und Grundkörper mehr vorhanden, so dass der Stößel sich relativ zum Grundkörper bewegen kann, insbesondere der Stößel durch seine Bewegung der die Auslösekraft übersteigenden Stoßkraft ausweichen kann.

Der Stößel kann einen insbesondere kreiszylindrischen Schaft aufweisen, der Grundkörper kann dabei eine Aufnahme mit einer an die äußere Mantelwand des Schaftes angepasste Innenmantelwand aufweisen und der Schaft in der Aufnahme in seiner Längserstreckungsrichtung linear verstellbar gelagert sein, wenn die Überlast-Schutzeinrichtung den Stößel vom Grundkörper freigegeben hat.

Der Stößel kann einen insbesondere kreiszylindrischen Schaft aufweisen, der Grundkörper kann dabei eine Aufnahme mit einer an die äußere Mantelwand des Schaftes angepasste Innenmantelwand aufweisen und der Schaft in der Aufnahme festgehalten ist, wenn die Überlast-Schutzeinrichtung in einer den bestimmungsgemäßen Gebrauch kennzeichnenden Anordnung den Stößel an dem Grundkörper fixiert.

Der Stößel, insbesondere der Schaft des Stößels kann, vorzugsweise an einem dem Stoßende des Stößels bzw. des Schaftes gegenüberliegenden Stirnende einen angesteckten oder angeschraubten Raststein aufweisen, welcher die wenigstens eine Rastfläche des Gegenrastmittels aufweist.

In einem ausgelösten Zustand der Überlast-Schutzeinrichtung steht dann dieser Raststein über die Kontur des Grundkörpers hinweg nach außen hervor. In einer Grundstellung des Grundkörpers kann dann der über die Kontur des Grundkörpers vorspringende Raststein an einer Anschlagsfläche, wie beispielsweise einer Innenwand des Gehäuses der Öffnungs-Hilfsvorrichtung anstehen bzw. anschlagen. Ist der Raststein in seinem nicht-ausgelösten Zustand vollständig innerhalb der Kontur des Grundkörpers enthalten, dann kann der Raststein in der Grundstellung jedoch nicht an der Anschlagsfläche, wie beispielsweise einer Innenwand des Gehäuses der Öffnungs-Hilfsvorrichtung anstehen bzw. anschlagen. Ein Anschlagen des ausgelösten Raststeines kann dazu genutzt werden, den ausgelösten Zustand der Überlast-Schutzeinrichtung detektieren zu können, insbesondere automatisch detektieren zu können, beispielsweise über eine Überwachung eines Stromanstiegs des Motors, welcher den Grundkörper bzw. den Stößel automatisch antreibt. Alternativ oder ergänzend kann der Motor auch derart angesteuert werden, dass in einem ausgelösten Zustand, indem der Raststein über die Kontur des Grundkörpers hinweg nach außen hervorsteht, der Grundkörper weiter in Richtung der Anschlagsfläche bzw. der Innenwand des Gehäuses getrieben wird, so dass der Raststein wieder in seine nicht-ausgelöste Stellung innerhalb des Grundkörpers springen kann, in welcher der Raststein vollständig innerhalb der Kontur des Grundkörpers liegt und der Stößel nun wieder starr mit dem Grundkörper gekoppelt bzw. verbunden ist.

In allen Ausführungsformen kann der Grundkörper und/oder der Raststein aus Polyetheretherketon (PEEK) hergestellt sein. Durch die Verwendung von Polyetheretherketon (PEEK) kann ein besonders stabiler Elastizitätsmodul erzielt werden, der insbesondere weitgehend unabhängig ist beispielsweise von Temperaturänderungen oder Alterungserscheinungen. Dies bedeutet, dass die Auslösekraft der Überlast-Schutzeinrichtung besonders genau eingehalten werden kann.

Die erfindungsgemäße Aufgabe wird außerdem gelöst durch ein Verfahren zum Betreiben eines Haushaltskältegeräts, wie beschrieben, aufweisend folgende Verfahrensschritte:
- elektrisch angetriebenes, automatisches Bewegen des Grundkörpers aus einer das Türblatt oder die Schublade aktivierenden Stellung in eine Grundstellung, in der die Überlast-Schutzeinrichtung in ihrem nicht-ausgelösten Zustand einen Abstand zu einer Anschlagsfläche der elektro-mechanischen Öffnungs-Hilfsvorrichtung, insbesondere einer Innenwand eines Gehäuses der elektro-mechanischen Öffnungs-Hilfsvorrichtung aufweist und in ihrem ausgelösten Zustand an der Anschlagsfläche der elektro-mechanischen Öffnungs-Hilfsvorrichtung, insbesondere an der Innenwand des Gehäuses der elektro-mechanischen Öffnungs-Hilfsvorrichtung ansteht,
- automatisches Überwachen eines Motorstromes eines Motors des elektro-mechanischen Aktuators der elektro-mechanischen Öffnungs-Hilfsvorrichtung,
- automatisches Signalisieren des Auslösens der Überlast-Schutzeinrichtung, wenn während des automatischen Überwachens des Motorstromes des Motors bei einem elektrisch angetriebenen, automatischen Bewegen des Grundkörpers in die Grundstellung im ausgelösten Zustand eine gegenüber einem elektrisch angetriebenen, automatischen Bewegen des Grundkörpers in die Grundstellung im nicht-ausgelösten Zustand erhöhte Stromaufnahme des Motors festgestellt wird.

Aufgrund eines automatischen Signalisierens des Auslösens der Überlast-Schutzeinrichtung kann beispielsweise die Steuervorrichtung des Haushaltskältegeräts eine Fehlfunktion am Haushaltskältegerät insbesondere optisch oder akustisch anzeigen, beispielsweise an einer Warnlampe. Alternativ oder ergänzend kann die Steuervorrichtung des Haushaltskältegeräts die Öffnungs-Hilfsvorrichtung automatisch elektrisch abschalten. Alternativ oder ergänzend kann die Steuervorrichtung des Haushaltskältegeräts die Öffnungs-Hilfsvorrichtung automatisch derart ansteuern, dass in einem ausgelösten Zustand, indem der Raststein über die Kontur des Grundkörpers hinweg nach außen hervorsteht, der Grundkörper weiter in Richtung der Anschlagsfläche bzw. der Innenwand des Gehäuses getrieben wird, so dass der Raststein wieder in seine nicht-ausgelöste Stellung innerhalb des Grundkörpers springen kann, in welcher der Raststein vollständig innerhalb der Kontur des Grundkörpers liegt und der Stößel nun wieder starr mit dem Grundkörper gekoppelt bzw. verbunden ist.

Zusammenfassend dargestellt kann zur Vermeidung von Getriebeschäden durch unsachgemäße Überlastung ein mechanischer Auslösemechanismus in die Zahnstange der Antriebseinheit integriert werden. Drückt beispielsweise der Benutzer zu kräftig auf eine geöffnete Türe, löst eine solche mechanische Überlastkupplung aus. Das Rücksetzen der Überlast-Sicherung kann durch automatisches oder manuelles Rückstellen des Stößels erfolgen, wobei die Zahnstange und die Stößelstange über ein spezielles Kupplungselement wieder ineinander rasten können und den Kraftschluss wieder herstellen. Die Stößelstange kann einen Rastkörper tragen. Dieser besitzt ein spezielles Profil als Gegenlager zu den Rastnasen der Federelemente. Die Federelemente sind Teile der Zahnstange, die als glasfaser-verstärkter Kunststoffkörper ausgeführt sein kann. Ebenso ist es möglich, den Rastkörper bzw. das Rastprofil in den Zahnstangen-Körper zu integrieren und den federnden Teil an der Stößelstange zu befestigen. Über optionale Einstellelemente lässt sich die Federkraft und damit die Auslösekraft noch präziser einstellen.

Nach einer bevorzugten Ausführungsform des erfindungsgemäßen Haushaltskältegerätes weist die Hilfsvorrichtung ein Gehäuse auf, innerhalb dem im Wesentlichen alle Komponenten der Hilfsvorrichtung angeordnet sind. Vorzugsweise sind insbesondere innerhalb des Gehäuses alle zum Betrieb der Hilfsvorrichtung notwendigen elektrischen und gegebenenfalls mechanischen Komponenten angeordnet, gegebenenfalls bis auf eine elektrische Stromversorgung. Ein Stellkörper ist vorzugsweise auch im Gehäuse angeordnet, ragt dann aber zumindest in seiner ausgefahrenen Stellung zumindest teilweise aus dem Gehäuse heraus. Das Gehäuse der Hilfsvorrichtung ist vorzugsweise aus Kunststoff, insbesondere aus glasfaserverstärktem Polyamid (PA-GF) gefertigt.

Ein Ausführungsbeispiel der Erfindung ist exemplarisch in den beigefügten schematischen Zeichnungen dargestellt.

Es zeigen:
- Fig. 1: ein Haushaltskältegerät mit einem Türblatt und einer elektro-mechanischen Öffnungs-Hilfsvorrichtung zum Öffnen des Türblatts in einer perspektivischen Darstellung,
- Fig. 2: eine Prinzipdarstellung der elektro-mechanischen Öffnungs-Hilfsvorrichtung,
- Fig. 3: eine Ausführungsform der elektro-mechanischen Öffnungs-Hilfsvorrichtung in einer Draufsicht,
- Fig. 4: eine perspektivische Darstellung der elektro-mechanischen Öffnungs-Hilfsvorrichtung gemäß Fig. 3 bei entferntem Gehäuse,
- Fig. 5: eine perspektivische Darstellung der Überlast-Schutzeinrichtung aus der elektromechanischen Öffnungs-Hilfsvorrichtung gemäß Fig. 4 in einer nicht ausgelösten Anordnung, und
- Fig. 6: eine perspektivische Darstellung der Überlast-Schutzeinrichtung aus der elektromechanischen Öffnungs-Hilfsvorrichtung gemäß Fig. 4 in einer ausgelösten Anordnung.

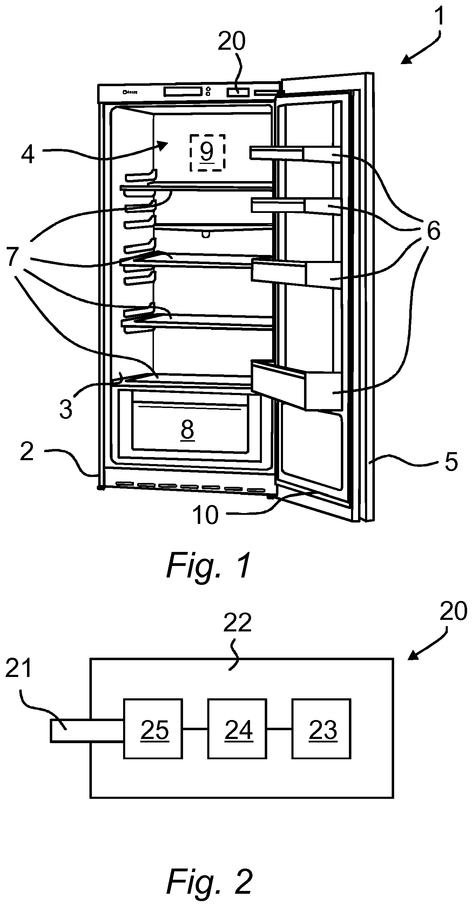

Die Fig. 1 zeigt in einer perspektivischen Darstellung ein Haushaltskältegerät 1, das einen wärmeisolierten Korpus 2 mit einem Innenbehälter 3 umfasst, der einen kühlbaren Innenraum 4 begrenzt. Der kühlbare Innenraum 4 ist zum Lagern von nicht näher dargestellten Lebensmitteln vorgesehen.

Das Haushaltskältegerät 1 weist im Falle des vorliegenden Ausführungsbeispiels ein schwenkbares Türblatt 5 zum Verschließen des kühlbaren Innenraums 4 auf. Das Türblatt 5 ist insbesondere bezüglich einer vertikal verlaufenden Achse schwenkbar gelagert. Bei geöffnetem Türblatt 5, wie in der Fig. 1 dargestellt, ist der kühlbare Innenraum 4 zugänglich.

An der in Richtung kühlbaren Innenraum 4 gerichteten Seite des Türblatts 5 sind im Falle des vorliegenden Ausführungsbeispiels mehrere Türabsteller 6 zum Lagern von Lebensmitteln angeordnet. Im kühlbaren Innenraum 4 sind insbesondere mehrere Fachböden 7 zum Lagern von Lebensmitteln angeordnet und insbesondere im unteren Bereich des kühlbaren Innenraums 4 ist eine Schublade 8 angeordnet, in der ebenfalls Lebensmittel gelagert werden können.

Das Haushaltskältegerät 1 umfasst eine insbesondere als Kältemittelkreislauf ausgeführte Kältevorrichtung zum Kühlen des kühlbaren Innenraums 4. Der Kältemittelkreislauf umfasst insbesondere einen Verdichter, einen dem Verdichter nachgeschalteten Verflüssiger, eine dem Verflüssiger nachgeschaltete Drosselvorrichtung, die insbesondere als ein Drossel- oder Kapillarrohr ausgeführt ist, und einen Verdampfer, der zwischen der Drosselvorrichtung und dem Verdichter angeordnet ist. Der Verdichter ist vorzugsweise innerhalb eines Maschineraums des Haushaltkältegerätes 1 angeordnet, der sich insbesondere hinter der Schublade 8 befindet.

Das Haushaltskältegerät 1 umfasst im Falle des vorliegenden Ausführungsbeispiels eine elektronische Steuervorrichtung 9, die eingerichtet ist, die Kältevorrichtung, insbesondere den Verdichter des Kältemittelkreislaufs in für den Fachmann in allgemein bekannter Weise derart anzusteuern, dass der kühlbare Innenraum 4 zumindest in etwa eine vorgegebene oder vorgebbare Soll-Temperatur aufweist. Die elektronische Steuervorrichtung 9 ist vorzugsweise derart eingerichtet, dass sie die Temperatur des kühlbaren Innenraums 4 regelt. Um gegebenenfalls die Ist-Temperatur des kühlbaren Innenraums 4 zu erhalten, kann das Haushaltskältegerät 1 wenigstens einen nicht näher dargestellten und mit der elektronischen Steuervorrichtung 9 verbundenen Temperatursensor aufweisen.

Das Haushaltskältegerät 1 weist ferner eine elektro-mechanische Öffnungs-Hilfsvorrichtung 20 auf, welche eingerichtet ist, ein Öffnen des geschlossenen Türblatts 5 zumindest zu unterstützen. Eine Prinzipdarstellung der elektro-mechanischen Öffnungs-Hilfsvorrichtung 20 ist in der Fig. 2 gezeigt.

Die elektro-mechanische Öffnungs-Hilfsvorrichtung 20 ist beispielsweise im oder am Korpus 2 befestigt und umfasst einen Stellkörper 21, z.B. einen Stößel, welcher automatisch mittels eines Aktuators 22 der elektro-mechanischen Öffnungs-Hilfsvorrichtung 20 von einer eingefahrenen in eine ausgefahrenen Stellung bewegt werden kann. In seiner eingefahrenen Stellung erlaubt der Stößel 21 ein Schließen des Türblatts 5 bzw. der Stößel 21 wird beim Schließen des Türblatts 5 in seine eingefahrene Stellung gedrückt. Der Aktuator 22 umfasst einen elektrischen Motor 23, ein Doppelverzahnungs-Stirnrad 24 und eine Zahnstange 25.

Im Falle des vorliegenden Ausführungsbeispiels umfasst das Haushaltskältegerät 1 eine an der in Richtung kühlbaren Innenraum 4 gerichteten Seite des Türblatts 5 befestigte Magnetdichtung 10, welche bei geschlossenem Türblatt 5 an der Stirnseite des Korpus 2 anliegt. Die Magnetdichtung 10 ist elastisch, sodass sich bei einem Drücken am geschlossenen Türblatt 5 dieses ein wenig in Richtung des kühlbaren Innenraums 4 bewegt, wodurch sich der Luftdruck innerhalb des kühlbaren Innenraums 4 ändert. Aufgrund der elastischen Magnetdichtung 10 löst sich bei einem Ziehen am geschlossenen Türblatt 5 die Magnetdichtung 10 nicht sofort vom Korpus 2, wodurch sich ebenfalls der Luftdruck innerhalb des kühlbaren Innenraums 4 ändert.

Im Falle des vorliegenden Ausführungsbeispiels ist die elektro-mechanische Öffnungs-Hilfsvorrichtung 20 derart ausgeführt, dass sie den Wunsch einer Person, das Türblatt 5 zu öffnen, erkennt, sobald die Person am geschlossenen Türblatt 5 zieht oder drückt. Daraufhin bewegt der Aktuator 22 automatisch den Stößel von seiner eingefahrenen Stellung in seine ausgefahrene Stellung. Während dieser Bewegung drückt der Stößel das Türblatt 5 zumindest so weit auf, dass sich die Magnetdichtung 10 vom Korpus 2 löst, sodass die Person das Türblatt 5 leichter komplett öffnen kann.

Beispielsweise aufgrund einer Messung und Auswertung der Änderung des Luftdrucks innerhalb des kühlbaren Innenraums 4 kann somit auf ein Ziehen oder Drücken am Türblatt 5 und somit auf den Wunsch einer Person, das geschlossene Türblatt 5 öffnen zu wollen, geschlossen werden. Demgemäß kann eine dem Fachmann als solches bekannte Sensorvorrichtung und eine entsprechende Steuereinrichtung vorgesehen sein, um den elektro-mechanischen Aktuator 22 zu aktivieren, wenn der Wunsch einer Person, das geschlossene Türblatt 5 öffnen zu wollen, erkannt wird, so dass das geschlossene Türblatt 5 bzw. die geschlossene Schublade durch Verstellen des Stellkörpers 21 durch den elektro-mechanischen Aktuator 22 zumindest teilweise automatisch geöffnet wird.

Das Haushaltskältegerät 1 kann auch eine Schublade aufweisen, welche zumindest teilweise aus dem kühlbaren Innenraum 4 herausziehbar und in den kühlbaren Innenraum 4 hineinschiebbar ist. Im hineingeschobenen Zustand verschließt diese Schublade den kühlbaren Innenraum 4. Ist diese Schublade zumindest teilweise aus dem kühlbaren Innenraum 4 herausgezogen, dann ist sie geöffnet. Die elektro-mechanische Öffnungs-Hilfsvorrichtung 20 kann dann auch dafür vorgesehen sein, den Wunsch, die Schublade zu öffnen, zu erkennen und die Schublade entsprechend zumindest teilweise automatisch zu öffnen.

Im Falle des vorliegenden Ausführungsbeispiels ist die elektro-mechanische Öffnungs-Hilfsvorrichtung 20 derart ausgeführt, dass sie den Wunsch einer Person, diese Schublade zu öffnen, erkennt, sobald die Person an der geschlossenen Schublade zieht oder drückt. Daraufhin bewegt der Aktuator 22 automatisch den Stößel von seiner eingefahrenen Stellung in seine ausgefahrene Stellung. Während dieser Bewegung drückt der Stößel die Schublade zumindest soweit aus dem kühlbaren Innenraum 4, dass sich eine Magnetdichtung der Schublade vom Korpus 2 löst, sodass die Person die Schublade leichter komplett öffnen kann.

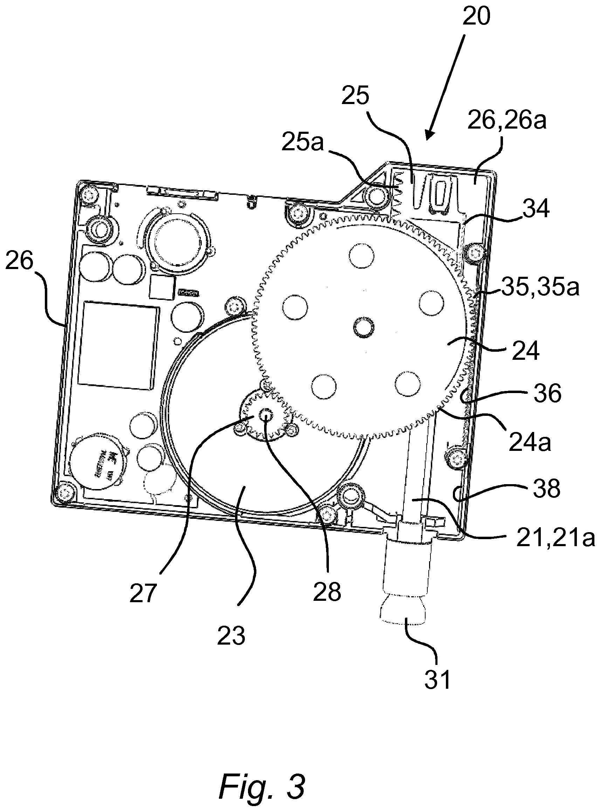

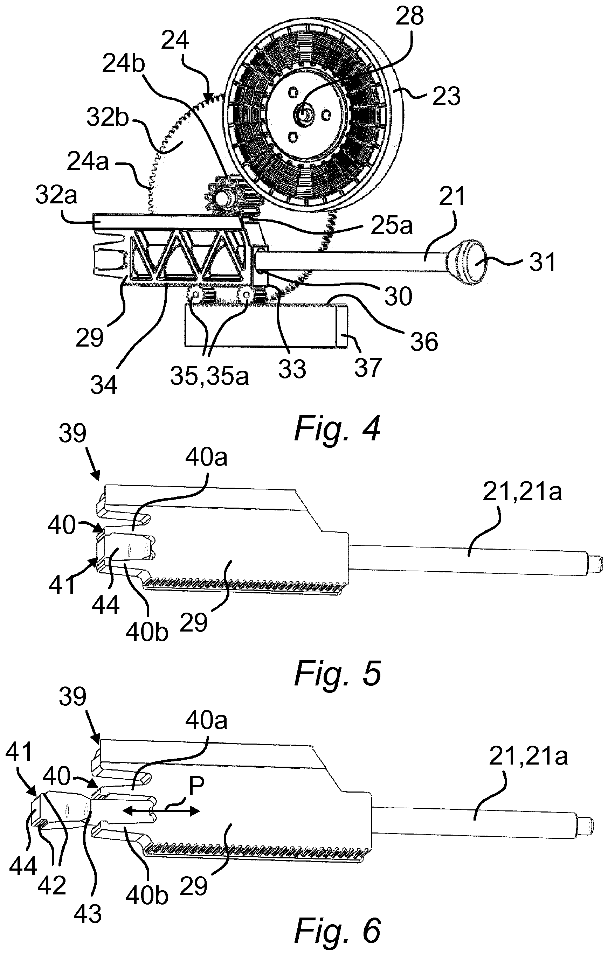

Der elektro-mechanische Aktuator 22 umfasst den elektrischen Motor 23, ein Antriebsritzel 27, das Doppelverzahnungs-Stirnrad 24, sowie die Zahnstange 25. Das Antriebsritzel 27 ist mit einer Motorwelle 28 des Motors 23 verbunden. Das Antriebsritzel 27 kämmt, wie insbesondere in Fig. 3 dargestellt ist, mit einer Eingangsverzahnung 24a des Doppelverzahnungs-Stirnrades 24. Das Doppelverzahnungs-Stirnrad 24 weist außerdem eine Ausgangsverzahnung 24b auf, welche, wie insbesondere in Fig. 4 dargestellt ist, mit einem Zahnstangenprofil 25a der Zahnstange 25 in Eingriff ist. Die Zahnstange 25 ist mit dem Stellkörper 21 verbunden.

Im dargestellten Ausführungsbeispiel ist, wie insbesondere in Fig. 4 dargestellt, die Zahnstange 25 an einem Grundkörper 29 ausgebildet. Der Grundkörper 29 weist eine Aufnahme 30 auf, in welche der Stellkörper 21, insbesondere der Stößel eingesteckt und darin verrastet ist. Der Stellkörper 21, insbesondere der Stößel weist an seinem freien Stirnende eine Kappe 31 auf. Die Kappe 31 kann beispielsweise auf das Stirnende des Stellkörpers 21, insbesondere des Stößels aufgesteckt oder aufgeschraubt sein. Insbesondere im Falle eines Stellkörpers 21 oder Stößels aus einem metallischen Werkstoff, wie Stahl, kann die Kappe 31 aus Kunststoff hergestellt sein. Die Kappe 31 berührt zumindest während des automatischen Öffnungsvorgangs das zu öffnende Türblatt 5 oder die zu öffnende Schubladenfront an dessen jeweiliger Innenseite. Der Grundkörper 29 weist außerdem eine erste Wange 32a auf, welche die Ausgangsverzahnung 24b des Doppelverzahnungs-Stirnrades 24 axial abstützt.

An einer dem Zahnstangenprofil 25a gegenüberliegenden Zahnstangenwand 33 der Zahnstange 25, bzw. des Grundkörpers 29, weist der Grundkörper 29 eine Wälzfläche 34, insbesondere in Form eines Wellenprofils auf. An der Wälzfläche 34 wälzen im Falle des vorliegenden Ausführungsbeispiels zwei Wälzkörper 35 in Form von gezahnten Stützrollen 35a ab. Die gezahnten Stützrollen 35a weisen im Falle des vorliegenden Ausführungsbeispiels jeweils ein Wellenprofil auf. Die Fig. 3 zeigt, dass die Wälzkörper 35, insbesondere die Stützrollen 35a an einer der Wälzfläche 34 gegenüberliegenden Seite der Wälzkörper 35 bzw. der Stützrollen 35a durch eine feststehende zweite Wälzfläche 36 gegen das Gehäuse 26 abgestützt sind. Die zweite Wälzfläche 36 kann, wie in Fig. 4 dargestellt, an einem separaten Stützkörper 37 ausgebildet sein, der an dem Gehäuse 26 befestigt ist, oder einteilig, wie in Fig. 3 dargestellt, unmittelbar mit einer Innenwand 38 des Gehäuses 26 ausgebildet sein.

Wie insbesondere die Fig. 5 und Fig. 6 zeigen, weist die Überlast-Schutzeinrichtung 39 ein mit dem Grundkörper 29 verbundenes Rastmittel 40 und ein mit dem Stößel 21a verbundenes zum Rastmittel 40 korrespondierendes Gegenrastmittel 41 auf, wobei Rastmittel 40 und Gegenrastmittel 41 ausgebildet sind, während eines bestimmungsgemäßen Gebrauchs der elektro-mechanischen Öffnungs-Hilfsvorrichtung 20 derart formschlüssig in gegenseitigem Eingriff zu stehen, wie dies in Fig. 5 gezeigt ist, dass eine durch den elektro-mechanischen Aktuator 22 erzeugte Antriebskraft auf den Stößel 21a übertragbar ist und bei Überschreiten der vorgegebenen Auslösekraft das Rastmittel 40 und das Gegenrastmittel 41 durch eine die vorgegebene Auslösekraft übersteigende Stoßkraft außer Eingriff zu bringen ist, wie dies in Fig. 6 gezeigt ist, derart, dass sich der Stößel 21a aus seiner starren Anordnung zum Grundkörper 29 löst und zum Grundkörper 29 verstellbar wird. Die Verstellbarkeit ist in Fig. 6 durch den Pfeil P angedeutet.

Im Falle des vorliegenden Ausführungsbeispiels weist das Rastmittel 40 zwei gegenüberliegend angeordnete federelastische Rasthaken 40a, 40b auf, welche in einer den bestimmungsgemäßen Gebrauch kennzeichnenden Anordnung (Fig. 5) wenigstens eine Rastfläche 42 des Gegenrastmittels 41 hintergreifen, wobei die federelastischen Rasthaken 40a, 40b ausgebildet sind, bei Erreichen der vorgegebenen Auslösekraft sich derart zu biegen, dass die wenigstens eine Rastfläche 42 des Gegenrastmittels 41 freigegeben wird, wie dies in Fig. 6 dargestellt ist.

Der Stößel 21a, insbesondere der Schaft des Stößels 21a, weist vorzugsweise an einem dem Stoßende des Stößels 21a bzw. des Schaftes gegenüberliegenden Stirnende 43 einen angesteckten oder angeschraubten Raststein 44 auf, welcher die wenigstens eine, im Falle des vorliegenden Ausführungsbeispiels zwei Rastflächen 42 des Gegenrastmittels 41 aufweist.

### BEZUGSZEICHENLISTE

- 1: Haushaltskältegerät
- 2: Korpus
- 3: Innenbehälter
- 4: kühlbarer Innenraum
- 5: Türblatt
- 6: Türabsteller
- 7: Fachböden
- 8: Schublade
- 9: elektronische Steuervorrichtung
- 10: Magnetdichtung
- 20: elektro-mechanische Öffnungs-Hilfsvorrichtung
- 21: Stellkörper
- 21a: Stößel
- 22: elektro-mechanischer Aktuator
- 23: Motor
- 23a: Stator
- 23b: Rotor
- 24: Doppelverzahnungs-Stirnrad
- 24a: Eingangsverzahnung
- 24b: Ausgangsverzahnung
- 25: Zahnstange
- 25a: Zahnstangenprofil
- 26: Gehäuse
- 26a: erste Gehäusehälfte
- 26b: zweite Gehäusehälfte
- 27: Antriebsritzel
- 28: Motorwelle
- 29: Grundkörper
- 30: Aufnahme
- 31: Kappe
- 32a: erste Wange
- 32b: zweite Wange
- 33: Zahnstangenwand
- 34: erste Wälzfläche
- 35: Wälzkörper
- 35a: Stützrollen
- 36: zweite Wälzfläche
- 37: Stützkörper
- 38: Innenwand
- 39: Überlast-Schutzeinrichtung
- 40: Rastmittel
- 40a,40b: Rasthaken
- 41: Gegenrastmittel
- 42: Rastfläche
- 43: Stirnende
- 44: Raststein

## Patentansprüche

1. Haushaltskältegerät, aufweisend einen wärmeisolierten Korpus (2), der einen Innenbehälter (3) mit einem zum Lagern von Lebensmitteln vorgesehenen kühlbaren Innenraum (4) aufweist, eine zum Kühlen des kühlbaren Innenraums (4) vorgesehene Kältevorrichtung und eine elektro-mechanische Öffnungs-Hilfsvorrichtung (20), sowie ein relativ zum wärmeisolierten Korpus (2) schwenkbar gelagertes, zum Öffnen und Schließen des kühlbaren Innenraums (4) vorgesehenes Türblatt (5) oder eine Schublade, welche im geschlossenen Zustand in den kühlbaren Innenraum (4) geschoben ist, um diesen zu schließen, und im geöffneten Zustand zumindest teilweise aus dem kühlbaren Innenraum (4) herausgezogen ist, wobei die elektro-mechanische Öffnungs-Hilfsvorrichtung (20) einen elektro-mechanischen Aktuator (22) aufweist, der ausgebildet ist, bei seiner Aktivierung das geschlossene Türblatt (5) bzw. die geschlossene Schublade durch Verstellen eines Stellkörpers (21) der elektro-mechanischen Öffnungs-Hilfsvorrichtung (20) zumindest teilweise automatisch zu öffnen, **dadurch gekennzeichnet, dass** der elektro-mechanische Aktuator (22) einen automatisch verstellbaren Grundkörper (29), einen im Grundkörper gelagerten Stößel (21a) als Stellkörper (21) und eine den Stößel (21a) im Grundkörper (29) arretierende Überlast-Schutzeinrichtung (39) aufweist, die ausgebildet ist, den Stößel (21a) im Grundkörper (29) starr festzuhalten, solange eine auf den Stößel (21a) einwirkende Stoßkraft kleiner bleibt, als eine vorgegebene Auslösekraft und den Stößel (21a) vom Grundkörper (29) freizugeben, sobald eine auf den Stößel (21a) einwirkende Stoßkraft die Auslösekraft überschreitet.

2. Haushaltskältegerät nach Anspruch 1, **dadurch gekennzeichnet, dass** die Überlast-Schutzeinrichtung (39) ein mit dem Grundkörper (29) verbundenes Rastmittel (40) und ein mit dem Stößel (21a) verbundenes zum Rastmittel (40) korrespondierendes Gegenrastmittel (41) aufweist, wobei Rastmittel (40) und Gegenrastmittel (41) ausgebildet sind, während eines bestimmungsgemäßen Gebrauchs der elektro-mechanischen Öffnungs-Hilfsvorrichtung (20) derart formschlüssig in gegenseitigem Eingriff zu stehen, dass eine durch den elektro-mechanischen Aktuator (22) erzeugte Antriebskraft auf den Stößel (21a) übertragbar ist und bei Überschreiten der vorgegebenen Auslösekraft das Rastmittel (40) und das Gegenrastmittel (41) durch eine die vorgegebene Auslösekraft übersteigende Stoßkraft außer Eingriff zu bringen ist, derart, dass sich der Stößel (21a) aus seiner starren Anordnung zum Grundkörper (29) löst und zum Grundkörper (29) verstellbar wird.

3. Haushaltskältegerät nach Anspruch 2, **dadurch gekennzeichnet, dass** das Rastmittel (40) wenigstens einen, insbesondere zwei gegenüberliegend angeordnete federelastische Rasthaken (40a, 40b) aufweist, welche in einer den bestimmungsgemäßen Gebrauch kennzeichnenden Anordnung wenigstens eine Rastfläche (42) des Gegenrastmittels (41) hintergreifen, wobei die federelastischen Rasthaken (40a, 40b) ausgebildet sind, bei Erreichen der vorgegebenen Auslösekraft sich derart zu biegen, dass die wenigstens eine Rastfläche (42) des Gegenrastmittels (41) freigegeben wird.

4. Haushaltskältegerät nach einem der Ansprüche 1 bis 3, **dadurch gekennzeichnet, dass** der Stößel (21a) einen insbesondere kreiszylindrischen Schaft aufweist, der Grundkörper (29) eine Aufnahme (30) mit einer an die äußere Mantelwand des Schaftes angepasste Innenmantelwand aufweist und der Schaft in der Aufnahme (30) in seiner Längserstreckungsrichtung linear verstellbar gelagert ist, wenn die Überlast-Schutzeinrichtung (39) den Stößel (21a) vom Grundkörper (29) freigegeben hat.

5. Haushaltskältegerät nach einem der Ansprüche 1 bis 4, **dadurch gekennzeichnet, dass** der Stößel (21a) einen insbesondere kreiszylindrischen Schaft aufweist, der Grundkörper (29) eine Aufnahme (30) mit einer an die äußere Mantelwand des Schaftes angepasste Innenmantelwand aufweist und der Schaft in der Aufnahme (30) festgehalten ist, wenn die Überlast-Schutzeinrichtung (39) in einer den bestimmungsgemäßen Gebrauch kennzeichnenden Anordnung den Stößel (21a) an dem Grundkörper (29) fixiert.

6. Haushaltskältegerät nach einem der Ansprüche 1 bis 5, **dadurch gekennzeichnet, dass** der Stößel (21a), insbesondere der Schaft des Stößels (21a), vorzugsweise an einem dem Stoßende des Stößels (21a) bzw. des Schaftes gegenüberliegenden Stirnende (43) einen angesteckten oder angeschraubten Raststein (44) aufweist, welcher die wenigstens eine Rastfläche (42) des Gegenrastmittels (41) aufweist.

7. Haushaltskältegerät nach einem der Ansprüche 1 bis 6, **dadurch gekennzeichnet, dass** der Grundkörper (29) aus Polyetheretherketon (PEEK) hergestellt ist.

8. Haushaltskältegerät nach einem der Ansprüche 1 bis 7, **dadurch gekennzeichnet, dass** der elektro-mechanische Aktuator (22) einen elektrischen Motor (23), ein Antriebsritzel (27), ein Doppelverzahnungs-Stirnrad (24) und eine Zahnstange (25) aufweist, wobei das Antriebsritzel (27) mit einer Motorwelle (28) des Motors (23) verbunden ist und mit der Eingangsverzahnung (24a) des Doppelverzahnungs-Stirnrades (24) kämmt, die Ausgangsverzahnung (24b) des Doppelverzahnungs-Stirnrades (24) mit einem Zahnstangenprofil (25a) der Zahnstange (25) in Eingriff ist und die Zahnstange (25) mit dem Stellkörper (21) über den Grundkörper (29) verbunden ist.

9. Verfahren zum Betreiben eines Haushaltskältegeräts (1) nach einem der Ansprüche 1 bis 8, aufweisend folgende Verfahrensschritte:
- elektrisch angetriebenes, automatisches Bewegen des Grundkörpers (29) aus einer das Türblatt (5) oder die Schublade aktivierenden Stellung in eine Grundstellung, in der die Überlast-Schutzeinrichtung (39) in ihrem nicht-ausgelösten Zustand einen Abstand zu einer Anschlagsfläche der elektro-mechanischen Öffnungs-Hilfsvorrichtung (20), insbesondere einer Innenwand (38) eines Gehäuses (26) der elektro-mechanischen Öffnungs-Hilfsvorrichtung (20) aufweist und in ihrem ausgelösten Zustand an einer Anschlagsfläche der elektro-mechanischen Öffnungs-Hilfsvorrichtung (20), insbesondere an der Innenwand (38) des Gehäuses (26) der elektro-mechanischen Öffnungs-Hilfsvorrichtung (20) ansteht,
- automatisches Überwachen eines Motorstromes eines Motors (23) des elektro-mechanischen Aktuators (22) der elektro-mechanischen Öffnungs-Hilfsvorrichtung (20),
- automatisches Signalisieren des Auslösens der Überlast-Schutzeinrichtung (39), wenn während des automatischen Überwachens des Motorstromes des Motors (23) bei einem elektrisch angetriebenen, automatischen Bewegen des Grundkörpers (29) in die Grundstellung im ausgelösten Zustand eine gegenüber einem elektrisch angetriebenen, automatischen Bewegen des Grundkörpers (29) in die Grundstellung im nicht-ausgelösten Zustand erhöhte Stromaufnahme des Motors (23) festgestellt wird.

## Claims

1. Household refrigeration appliance having a heat-insulated carcass (2) which has an inner container (3) with a coolable interior space (4) for storing food, a refrigeration device provided for cooling the coolable interior space (4) and an electromechanical opening assisting device (20), as well as a door leaf (5) mounted pivotable relative to the heat-insulated carcass (2) for opening and closing the coolable interior space (4), or a drawer which in the closed state is pushed into the coolable interior space (4) in order to close it, and in the open state is at least partially withdrawn from the coolable interior space (4), wherein the electromechanical opening assisting device (20) comprises an electromechanical actuator (22) which is configured, on activation thereof, to open the closed door leaf (5) or the closed drawer automatically at least partially by displacement of a control body (21) of the electromechanical opening assisting device (20), **characterised in that** the electromechanical actuator (22) has an automatically displaceable base body (29), a plunger (21a) mounted in the base body as the control body (21) and an overload protection device (39) which arrests the plunger in the base body (21) and is configured to fix the plunger (21a) rigidly in the base body (29), for as long as an impact force acting on the plunger (21a) remains smaller than a pre-determined trigger force and to release the plunger (21a) from the base body (29) as soon as an impact force acting on the plunger (21a) exceeds the trigger force.

2. Household refrigeration appliance according to claim 1, **characterised in that** the overload protection device (39) has a locking means (40) connected to the base body (29) and a counter-locking means (41) corresponding to the locking means (40) and connected to the plunger (21a), wherein the locking means (40) and the counter-locking means (41) are configured to come into form-fitting mutual engagement during proper use of the electromechanical opening assisting device (20) such that a drive force generated by the electromechanical actuator (22) is transferable to the plunger (21a) and, on exceeding the pre-determined trigger force, the locking means (40) and the counter-locking means (41) are to be brought out of engagement by means of an impact force exceeding the pre-determined trigger force such that the plunger (21a) detaches from its rigid arrangement relative to the base body (29) and becomes displaceable relative to the base body (29).

3. Household refrigeration appliance according to claim 2, **characterised in that** the locking means (40) has at least one, in particular, two elastic locking hooks (40a, 40b) arranged mutually opposed which, in an arrangement characterising the proper use, engage behind at least one locking surface (42) of the counter-locking means (41), the elastic locking hooks (40a, 40b) being configured, on reaching the pre-determined trigger force, to bend such that the at least one locking surface (42) of the counter-locking means (41) is released.

4. Household refrigeration appliance according to one of claims 1 to 3, **characterised in that** the plunger (21a) has, in particular, a circular cylindrical shaft, the base body (29) has a receptacle (30) with an inner mantle wall matched to the outer mantle wall of the shaft and the shaft is mounted in the receptacle (30) linearly displaceable in its longitudinal extent when the overload protection device (39) has released the plunger (21a) from the base body (29).

5. Household refrigeration appliance according to one of claims 1 to 4, **characterised in that** the plunger (21a) has, in particular, a circular cylindrical shaft, the base body (29) has a receptacle (30) with an inner mantle wall matched to the outer mantle wall of the shaft and the shaft is firmly held in the receptacle (30) when in an arrangement characterising the proper use, the overload protection device (39) fixes the plunger (21a) on the base body (29).

6. Household refrigeration appliance according to one of claims 1 to 5, **characterised in that** the plunger (21a), in particular, the shaft of the plunger (21a), preferably has, on a front end (43) opposite to the impact end of the plunger (21a) or the shaft, a pushed on or screwed on locking block (44) which has the at least one locking surface (42) of the counter-locking means (41).

7. Household refrigeration appliance according to one of claims 1 to 6, **characterised in that** the base body (29) is made of polyether ether ketone (PEEK).

8. Household refrigeration appliance according to one of claims 1 to 7, **characterised in that** the electromechanical actuator (22) comprises an electric motor (23), a drive pinion (27), a double-toothing crown wheel (24) and a toothed rack (25), the drive pinion (27) being connected to a motor shaft (28) of the motor (23) and meshing with the input toothing (24a) of the double-toothing crown wheel (24), the output toothing (24b) of the double-toothing crown wheel (24) meshing with a toothed rack profile (25a) of the toothed rack (25) and the toothed rack (25) being connected to the control body (21) by means of the base body (29).

9. Method for operating a household refrigeration appliance (1) according to one of claims 1 to 8, having the following steps:
- electrically powered, automatic movement of the base body (29) from a position activating the door leaf (5) or the drawer into a basic position in which the overload protection device (39), in its non-triggered state, has a distance from a stop surface of the electromechanical opening assisting device (20), in particular an inner wall (38) of a housing (26) of the electromechanical opening assisting device (20) and, in its triggered state, lies against a stop surface of the electromechanical opening assisting device (20), in particular against the inner wall (38) of the housing (26) of the electromechanical opening assisting device (20),
- automatic monitoring of a motor current of a motor (23) of the electromechanical actuator (22) of the electromechanical opening assisting device (20),
- automatic signaling of the triggering of the overload protection device (39) when, during the automatic monitoring of the motor current of the motor (23) in the case of an electrically powered automatic movement of the base body (29) into the basic position in the triggered state, a raised current uptake by the motor (23) is determined as compared with an electrically powered automatic movement of the base body (29) into the basic position in the non-triggered state.

## Revendications

1. Appareil frigorifique à usage ménager, présentant un corps (2) calorifugé qui présente un réservoir intérieur (3) doté d'un espace intérieur (4) réfrigérable ménagé pour stocker des denrées alimentaires, un dispositif de réfrigération ménagé pour réfrigérer l'espace intérieur (4) réfrigérable, et un dispositif auxiliaire d'ouverture (20) électromécanique, ainsi qu'un panneau de porte (5) logé de manière pivotante par rapport au corps (2) calorifugé, ménagé pour ouvrir et fermer l'espace intérieur (4) réfrigérable, ou un tiroir, lequel, à l'état fermé, est poussé dans l'espace intérieur (4) réfrigérable afin de fermer ce dernier, et, à l'état ouvert, est extrait au moins en partie hors de l'espace intérieur (4) réfrigérable, le dispositif auxiliaire d'ouverture (20) électromécanique présentant un actionneur (22) électromécanique qui est réalisé, lors de son activation, pour ouvrir automatiquement au moins en partie le panneau de porte (5) fermé resp. le tiroir fermé par déplacement d'un corps de réglage (21) du dispositif auxiliaire d'ouverture (20) électromécanique, **caractérisé en ce que** l'actionneur (22) électromécanique présente un corps de base (29) réglable automatiquement, un poussoir (21a) logé dans le corps de base en tant que corps de réglage (21), et un dispositif de protection contre la surcharge (39) bloquant le poussoir (21a) dans le corps de base (29), lequel dispositif de protection contre la surcharge est réalisé pour retenir le poussoir (21a) de manière fixe dans le corps de base (29) tant qu'une force de poussée agissant sur le poussoir (21a) reste inférieure à une force de déclenchement prédéfinie, et pour libérer le poussoir (21a) du corps de base (29) dès qu'une force de poussée agissant sur le poussoir (21a) dépasse la force de déclenchement.

2. Appareil frigorifique à usage ménager selon la revendication 1, **caractérisé en ce que** le dispositif de protection contre la surcharge (39) présente un moyen d'encliquetage (40) relié au corps de base (29) et un contre-moyen d'encliquetage (41) correspondant au moyen d'encliquetage (40), relié au poussoir (21a), le moyen d'encliquetage (40) et le contre-moyen d'encliquetage (41) étant réalisés pour être en prise mutuelle par adhérence de forme pendant une utilisation, conforme à l'emploi prévu, du dispositif auxiliaire d'ouverture (20) électromécanique, de manière à ce qu'une force d'entraînement générée par l'actionneur (22) électromécanique soit transmissible sur le poussoir (21a) et que, lorsque la force de déclenchement prédéfinie est dépassée, le moyen d'encliquetage (40) et le contre-moyen d'encliquetage (41) soient désengagés par une force de poussée dépassant la force de déclenchement prédéfinie, de façon à ce que le poussoir (21a) se dégage de sa disposition fixe par rapport au corps de base (29) et soit réglable par rapport au corps de base (29).

3. Appareil frigorifique à usage ménager selon la revendication 2, **caractérisé en ce que** le moyen d'encliquetage (40) présente au moins un, notamment deux crochets d'encliquetage (40a, 40b) élastiques disposés de manière opposée, lesquels, dans une disposition caractérisant l'utilisation conforme à l'emploi, ont prise à l'arrière au moins d'une surface d'encliquetage (42) du contre-moyen d'encliquetage (41), les crochets d'encliquetage (40a, 40b) élastiques étant réalisés pour fléchir lorsque la force de déclenchement est obtenue, de manière à ce que l'au moins une surface d'encliquetage (42) du contre-moyen d'encliquetage (41) soit libérée.

4. Appareil frigorifique à usage ménager selon l'une quelconque des revendications 1 à 3, **caractérisé en ce que** le poussoir (21a) présente une tige notamment cylindrique circulaire, **en ce que** le corps de base (29) présente un logement (30) muni d'une paroi d'enveloppe intérieure adaptée à la paroi d'enveloppe extérieure, et **en ce que** la tige est logée dans le logement (30) de manière linéairement réglable dans sa direction d'étendue longitudinale lorsque le dispositif de protection contre la surcharge (39) a libéré le poussoir (39) du corps de base (29).

5. Appareil frigorifique à usage ménager selon l'une quelconque des revendications 1 à 4, **caractérisé en ce que** le poussoir (21a) présente une tige notamment cylindrique circulaire, **en ce que** le corps de base (29) présente un logement (30) muni d'une paroi d'enveloppe intérieure adaptée à la paroi d'enveloppe extérieure, et **en ce que** la tige est fixée dans le logement (30) lorsque le dispositif de protection contre la surcharge (39), dans une disposition caractérisant l'utilisation conforme à l'emploi prévu, fixe le poussoir (21a) sur le corps de base (29).

6. Appareil frigorifique à usage ménager selon l'une quelconque des revendications 1 à 5, **caractérisé en ce que** le poussoir (21a), notamment la tige du poussoir (21a), présente un bloc d'encliquetage (44) emboîté ou vissé de préférence sur une extrémité frontale (43) opposée à l'extrémité de poussée du poussoir (21a) resp. de la tige, lequel présente l'au moins une surface d'encliquetage (42) du contre-moyen d'encliquetage (41).

7. Appareil frigorifique à usage ménager selon l'une quelconque des revendications 1 à 6, **caractérisé en ce que** le corps de base (29) est fabriqué en polyétheréthercétone (PEEK).

8. Appareil frigorifique à usage ménager selon l'une quelconque des revendications 1 à 7, **caractérisé en ce que** l'actionneur (22) électromécanique présente un moteur électrique (23), un pignon d'entraînement (27), une roue droite à double denture (24) et une crémaillère (25), le pignon d'entraînement (27) étant relié à un arbre moteur (28) du moteur (23) et s'engrenant avec la denture d'entrée (24a) de la roue droite à double denture (24), la denture de sortie (24b) de la roue droite à double denture (24) étant en prise avec un profil de crémaillère (25a) de la crémaillère (25), et la crémaillère (25) étant reliée au corps de réglage (21) par l'intermédiaire du corps de base (29).

9. Procédé de fonctionnement d'un appareil frigorifique (1) à usage ménager selon l'une quelconque des revendications 1 à 8, présentant les étapes de procédé suivantes :
- déplacement automatique, par entraînement électrique, du corps de base (29) à partir d'une position activant le panneau de porte (5) ou le tiroir en une position de base dans laquelle le dispositif de protection contre la surcharge (39), dans son état non déclenché, présente un écart par rapport à une surface de butée du dispositif auxiliaire d'ouverture (20) électromécanique, notamment par rapport à une paroi intérieure (38) d'un boîtier (26) du dispositif auxiliaire d'ouverture (20), et, dans son état déclenché, est appliqué contre une surface de butée du dispositif auxiliaire d'ouverture (20) électromécanique, notamment contre la paroi intérieure (38) du boîtier (26) du dispositif auxiliaire d'ouverture (20) électromécanique,
- contrôle automatique d'un courant de moteur d'un moteur (23) de l'actionneur (22) électromécanique du dispositif auxiliaire d'ouverture (20) électromécanique,
- signalisation automatique du déclenchement du dispositif de protection contre la surcharge (39) lorsque, pendant le contrôle automatique du courant de moteur du moteur (23), lors d'un déplacement automatique, par entraînement électrique, du corps de base (29) en la position de base à l'état déclenché, une consommation élevée de courant du moteur (23) par rapport à un mouvement automatique, par entraînement électrique, du corps de base (29) en la position de base à l'état non déclenché, est constatée.
